# EUROPEAN PATENT SPECIFICATION

(11) **EP 1 584 464 B1**
(45) Date of publication and mention of the grant of the patent: **18.06.2008**
(21) Application number: 04021580.8
(22) Date of filing: 10.09.2004
(51) Int. Cl.: B32B 27/10, C23C 14/20

(54) **Sheet for packaging food and method for manufacturing it**
Bogen zur Verpackung von Nahrungsmitteln und Verfahren zu deren Herstellung
Feuille pour l'emballage de denrées alimentaires et sa méthode de fabrication

(30) Priority: 30.03.2004 IT PD20040085
(43) Date of publication of application: 12.10.2005
(73) Proprietor: ESSEOQUATTRO S.P.A., 35010 Carmignano di Brenta (Padova) (IT)
(72) Inventor: Ortolani, Silvia, 36100 Vicenza (IT); Ortolani, Roberta, 36100 Vicenza (IT); Ortolani, Giuseppe, 35010 Carmignano di Brenta (IT)
(74) Representative: Modiano, Micaela Nadia

(56) References cited:
- EP-A- 0 437 853
- EP-A- 1 164 085
- WO-A-98/51491
- GB-A- 598 637
- GB-A- 743 281
- US-A- 3 480 464
- PATENT ABSTRACTS OF JAPAN vol. 0182, no. 89 (M-1614), 2 June 1994 (1994-06-02) & JP 6 055722 A (DAINIPPON PRINTING CO LTD), 1 March 1994 (1994-03-01)

## Description

The present invention relates to a sheet for packaging food.

Various kinds of sheet for packaging foods sold loose by weight, such as salami and cold pork meat, cheese, meat, bakery products and the like, are currently known.

Sheets of the type that comprises a first outer layer made of paper, coupled to a second inner layer made of polyethylene, are widely used.

Characteristic, distinctive and decorative markings are generally printed on the outer paper layer, while the polyethylene layer makes contact with the food in order to provide its best preservation.

These conventional types of sheet, while being widely used, have aspects that can be improved.

For example, such sheets are not able to act as a barrier to light and to infrared radiation, with important limitations for the preservation of the food, whose decomposition is facilitated by light.

Other known sheets have a paper layer on which a metalization operation deposits a layer of aluminum suitable to reflect light and infrared radiation.

However, these sheets can be placed in contact with the food only by means of their non-metalized side, due to the real risk of migration of the metal toward the food.

US-A-3480464 describes a multilayer sheet comprising a first substrate layer of paper, said substrate layer being uniformly coated with a second layer of a film-forming olefin polymer, said second layer of olefin polymer being uniformly coated with a third layer of a metal, and a fourth layer of a film forming non-aromatic hydrocarbon polymer being uniformly coated over said third layer of metal. Intermediate adhesion promoting layers of polyalkyleneimine are interposed between the paper layer and the olefin layer.

The aim of the present invention is to provide a sheet for packaging food that is capable of obviating the problems and drawbacks of known types of sheet.

Another object of the present invention is to provide a waterproof sheet that ensures that the packaged food is protected against light and infrared radiation but also ensures that the aluminum does not migrate from the sheet.

Another object of the present invention is to provide a sheet that can be recycled easily and completely with respect to conventional types of sheet.

Another object of the present invention is to provide a sheet whose components are substantially biodegradable by composting.

Another object of the present invention is to provide a sheet for packaging food that is lighter, for an equal format used, than conventional types of sheet.

Another object of the present invention is to provide a sheet in which two portions thereof can be heat-sealed to each other, allowing to produce packages and containers that are sealed and are therefore also hermetic.

A further object of the present invention is to provide a sheet for packaging food that is capable of ensuring better preservation over time of the organoleptic characteristics and of the freshness and appearance of the packaged food.

A still further object of the present invention is to provide a sheet for packaging food that can be manufactured cheaply with known systems and technologies.

This aim and these and other objects that will become better apparent hereinafter are achieved by a sheet for packaging food, of the type that comprises a first layer made of paper that is coupled to a second layer made of polyethylene, characterized in that a third metallic layer is deposited on said second polyethylene layer, said second layer being coupled to said first layer on the side of the third metallic layer by interposing a fourth adhesive layer between said third metallic layer and said first paper layer, said fourth adhesive layer being based on vegetable starches and glucose.

Further characteristics and advantages of the invention and of the method for manufacturing it will become better apparent from the following detailed description of a preferred but not exclusive embodiment thereof, illustrated by way of non-limiting example in the accompanying drawings, wherein:

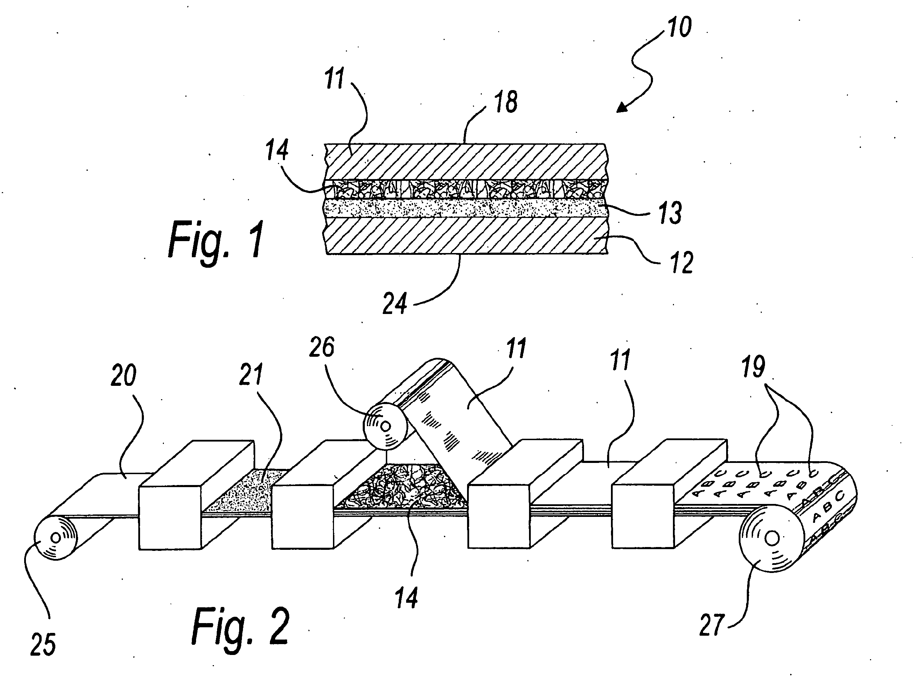

Figure 1 is a sectional view of a portion of sheet according to the invention;
Figure 2 is a schematic view of the method for producing a sheet according to the invention.

With reference to the figures, a sheet for packaging food according to the invention is generally designated by the reference numeral 10.

The sheet 10 comprises a first layer 11 made of paper, which is coupled to a second layer 12 made of polyethylene.

A third metallic layer 13 is deposited on the second polyethylene layer 12.

The second layer 12 is coupled to the first layer 11 on the side of the third metallic layer 13 by interposing a fourth adhesive layer 14 between the third metallic layer 13 and the first paper layer 11.

In the embodiment described here, the third metallic layer 13 is advantageously made of aluminum powder.

The third aluminum layer 13 provides the sheet with the ability to reflect light and infrared radiation, facilitating preservation of the freshness of the food contained in the package.

The fourth adhesive layer 14 is based on vegetable starches and glucose.

The use of the adhesive layer 14 based on vegetable starches and glucose, in addition to performing in an optimum manner the function of making the third aluminum layer 13 and the first paper layer 11 adhere intimately by using only natural substances suitable for possible contact with food products, allows during disposal of the sheet 10 to separate easily the first layer 11 from the second layer 12 and the third layer 13.

This separation allows disposal of the various layers according to the criteria of sorted waste collection.

The aluminum layer 13 is designed, as mentioned, to act as a barrier for light and at the same time reflect infrared radiation, also repelling the heat that said radiation would transmit to the food.

Following the adhesion of the paper layer 11 to the adhesive layer 14, it is possible to print on the outer face 18 of the paper layer 11, depending on the requirements of the seller, characteristic, distinctive or decorative markings 19.

According to requirements, the sheet 10 is cut into specific formats, for example for manual packaging of sliced or whole salami and cold pork meat products, both fresh and mature, cheese in slices and pieces, both soft and matured, fresh meat, et cetera.

The third layer 13 of aluminum powder is provided by no more than 0.05 grams of aluminum powder per square meter, an amount that fully achieves the aim of acting as a barrier against light and infrared radiation.

The paper layer 11 weighs between 35 and 45 grams per square meter, plus 2 to 3 grams of adhesive layer 14 per square meter.

The total grammage of the sheet 10 varies substantially between 44 and 54 grams per square meter.

This total weight is lower than the weight of known sheets that have a paper-aluminum bonding.

In order to produce bags for the bread-baking sector, the weight of the paper layer 11 is increased to 50-55 grams per square meter if it is necessary to carry 4 to 5 kilograms of food.

In practice, it has been found that the invention thus described solves the problems noted in known types of food packaging sheet.

Moreover, the present invention also provides a method for manufacturing such a food packaging sheet.

In particular, the present invention provides a waterproof sheet that ensures protection of the packaged food against the light and infrared radiation but also ensures that the aluminum does not migrate from the sheet.

Moreover, the present invention provides a sheet that can be recycled easily and completely with respect to known types of sheet.

Further, the present invention provides a sheet whose components are substantially biodegradable by composting in a natural environment.

Moreover, the present invention provides a food packaging sheet that is lighter, for an equal format used, than conventional types of sheet.

Moreover, the present invention provides a sheet in which two portions thereof can be mutually heat-sealed, allowing to produce packages and containers that are sealed and are therefore also hermetic.

The present invention also provides a food packaging sheet that is capable of ensuring better preservation over time of the organoleptic characteristics and of the freshness and appearance of the packaged food.

Finally, the present invention provides a food packaging sheet that can be manufactured cheaply with known systems and technologies.

The invention thus conceived is susceptible of numerous modifications and variations, all of which are within the scope of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A sheet for packaging food, of the type that comprises a first layer made of paper (11) that is coupled to a second layer made of polyethylene (12), **characterized in that** a third metallic layer (13) is deposited on said second polyethylene layer (12), said second layer (12) being coupled to said first layer (11) on the side of the third metallic layer (13) by interposing a fourth adhesive layer (14) between said third metallic layer (13) and said first paper layer (11), said fourth adhesive layer (14) being based on vegetable starches and glucose.

2. The sheet according to claim 1, **characterized in that** said third metallic layer (13) is made of aluminum powder.

## Patentansprüche

1. Ein Bogen zur Verpackung von Lebensmitteln, vom Typ, der eine erste Schicht aus Papier (11) umfasst, die mit einer zweiten Schicht aus Polyethylen (12) verbunden ist, **dadurch gekennzeichnet, dass** eine dritte metallische Schicht (13) auf die zweite Polyethylenschicht (12) aufgetragen ist, wobei die zweite Schicht (12) mit der ersten Schicht (11) auf der Seite der dritten metallischen Schicht (13) durch das Dazwischenlegen einer vierten Klebstoffschicht (14) zwischen der dritten metallischen Schicht (13) und der ersten Papierschicht (11) gekoppelt ist, wobei die vierte Klebstoffschicht (14) auf pflanzlichen Stärken und Glukose basiert.

2. Der Bogen gemäß Anspruch 1, **dadurch gekennzeichnet, dass** die dritte metallische Schicht (13) aus Aluminiumpulver besteht.

## Revendications

1. Feuille pour l'emballage de denrées alimentaires, du type comprenant une première couche en papier (11) qui est couplée à une deuxième couche en polyéthylène (12), **caractérisée en ce qu'**une troisième couche métallique (13) est déposée sur ladite deuxième couche en polyéthylène (12), ladite deuxième couche (12) étant couplée à ladite première couche (11) sur le côté de la troisième couche métallique (13) par l'interposition d'une quatrième couche adhésive (14) entre ladite troisième couche métallique (13) et ladite première couche en papier (11), ladite quatrième couche adhésive (14) étant à base de glucose et d'amidons végétaux.

2. Feuille selon la revendication 1, **caractérisée en ce que** ladite troisième couche métallique (13) est en poudre d'aluminium.
